# EUROPEAN PATENT SPECIFICATION

(11) **EP 3 021 458 B1**
(45) Date of publication and mention of the grant of the patent: **24.04.2019**
(21) Application number: 14193041.2
(22) Date of filing: 13.11.2014
(51) Int. Cl.: H02K 1/27, H02K 7/18

(54) **Rotor of a wind turbine**
Rotor einer Windturbine
Rotor d'une éolienne

(43) Date of publication of application: 18.05.2016
(73) Proprietor: Siemens Aktiengesellschaft, 80333 München (DE)
(72) Inventor: Azar, Ziad, Sheffield, S6 2NR (GB)

(56) References cited:
- EP-A1- 0 112 636
- EP-A1- 0 994 550
- EP-A2- 2 461 462
- WO-A1-2007/010948
- WO-A1-2007/119952
- US-A1- 2010 026 123

## Description

The invention relates to a rotor of an electrical machine. In particular, the invention relates to a rotor of an electric generator that has permanent magnets as excitation source. Furthermore, the invention relates to a wind turbine comprising an electric generator with a stator and such a rotor.

Irreversible demagnetization of permanent magnets of a rotor of an electrical machine can cause considerable reduction in the performance of the electrical machine and in the permanent magnet withstanding capabilities against operation conditions, i.e. loads and temperatures. If the permanent magnet is at least partially demagnetized this demagnetization is usually irreversible. Thus, the permanent magnet may need external re-magnetization which is related to considerable effort and costs. Irreversible demagnetization may, for instance, occur if a strong external magnetic field is applied to the permanent magnet. In an electrical machine comprising a stator and a rotor such a strong magnetic field may occur if a short circuit between the stator coils (phases) occurs. Then, due to a possible irreversible demagnetization of the permanent magnets the performance and efficiency of the electrical machine may be decreased, and the magnets demagnetisation withstanding capabilities against more short-circuit faults and operation temperatures may be also reduced.

In the state of the art, the capability of the permanent magnets to withstand demagnetization is, for example, by adding dysprosium in a certain fraction to the material of the permanent magnet. Dysprosium is a chemical element adhering to the rare earth elements. Dysprosium is relatively expensive, thus the costs of the permanent magnets and consequently of the rotor is increased. Therefore, it would be advantageous to develop a concept how to reduce the risk of demagnetization which is less expensive.

Dysprosium has the further disadvantage that it reduces the magnetic remanence, i.e. the magnetic flux density. This in turn reduces the electromagnetic performance of the electrical machine.

The document EP2461462 discloses shields that hold permanent magnets to the rotor core and
the document EP0112636 discloses magnetic shields.

Thus, it is desirable to provide a rotor of an electrical machine with an improved capability to withstand demagnetization during application of a strong external magnetic field to the rotor.

This objective is solved by the independent claim 1. Further developments and modifications are described in the dependent claims.

According to the invention there is provided a rotor of an electrical machine, in particular a rotor of an electric generator. The rotor comprises a plurality of circumferentially arranged permanent magnets. The permanent magnets have a decreasing radial thickness at their circumferential edge portions, and adjacent permanent magnets comprise a spacing between each other. A magnetic shield at least partially covers the spacing between two adjacent permanent magnets and at least partially covers the circumferential edge portions.

The fact that the permanent magnets are arranged circumferentially implies that the rotor of the electrical machine rotates in a rotational direction. Advantageously, the electrical machine comprises a stator and the rotor. The stator and the rotor are substantially rotationally symmetric and have a common axis of symmetry. The rotor may be located radially more outwards than the stator or the stator may be located more radially outwards than the rotor. The notion "circumferential" signifies a direction along the perimeter of the substantially circular cross section of the rotor or the stator.

A plurality of permanent magnets are arranged circumferentially along the perimeter of the rotor. The permanent magnets as such may have a substantially rectangular cross section. This has the advantage of a relatively simple manufacturing process of producing the permanent magnets. In principle, other shapes of the permanent magnets are possible, too, such as arc-shaped permanent magnets.

A decreasing radial thickness of the permanent magnets at their circumferential edge portions, i.e. shaping, is beneficial regarding cogging and torque ripple of the electrical machine. Cogging and torque ripple may generate noise and vibration, which is commonly undesired for the electrical machine. By designing a smooth and rounded edge portion and thus preventing sharp edges, cogging and torque ripple is reduced. Permanent magnets with a decreasing thickness at the respective circumferential edge portions are also referred to as shaped permanent magnets. During short circuit faults, there will be an increased risk for irreversible demagnetization particularly at the circumferential edge portions of the permanent magnet. In the past this increased risk has been approached by adding more dysprosium to the magnet.

The magnetic shield covers partially or fully these circumferential edge portions. The shielding of the most sensitive regions of the permanent magnet reduces the probability that demagnetization of the permanent magnet at a given external magnetic or electric field occurs. The technical background how the shielding and the reduction of the irreversible demagnetization probability occur is that alternative flux paths for the armature reaction field are created by the magnetic shields. The dimension and the shaping of the magnetic shield have to be optimized for a given design of the rotor in order to maximize the highest performance of the electrical machine.

An advantage of the described rotor is that the content of dysprosium in the permanent material can be reduced by keeping the capability of withstanding demagnetization at the same level.

Another advantage is the improvement of the electromagnetic performance of the electrical machine since the magnetic field becomes larger. This means that a larger electromagnetic torque, also increases the reluctance torque, in other words a larger difference between the d-axis and q-axis reluctances. In yet other words, the proposed rotor structure increases the reluctance variation, thus a larger reluctance torque and consequently a larger total torque of the electrical machine can be generated.

In an embodiment of the invention, the magnetic shield comprises electrical steel.

In particular, it can have the same material as the rotor back, i.e. laminated or solid electrical steel. For this purpose, conventional electrical steel is well suited.

In another advantageous embodiment, the permanent magnet comprises less than 1 per cent of weight, in particular less than 0.5 per cent of weight, of dysprosium.

As has been described above, the chemical element dysprosium has the effect of increasing the capability of the permanent magnet to withstand demagnetization. A small fraction of dysprosium within the permanent magnet, as it is the case for contents below 1 per cent, has the advantage of reduced costs of the permanent magnet, as dysprosium is relatively expensive.

In principle, several design options for the arrangement of the magnetic shield and the permanent magnets are possible.

In a first alternative, the magnetic shield is connected with the rotor by means of a support element, i.e. the magnetic shield, the support element and the rotor back are one part. In other words, the support element connects the magnetic shield with the remaining part of the rotor such as a rotor back into which or onto which the permanent magnets are attached. The magnetic shield and the support element can be also two separated components which are well connected with each other. They also may be represented by one single piece.

In a non-claimed example, the magnetic shield is directly attached to two adjacent permanent magnets at the respective circumferential edge portions. This has the advantage that only the necessary material is included in the rotor of the electrical machine. If the permanent magnets are attached themselves reliably to the remaining part of the rotor, the added addition of another component of the rotor, namely the magnetic shield, is usually a minor amendment.

In an embodiment of the invention, the magnetic shield applies a mechanical holding for the permanent magnets. This means that the permanent magnets are fully or partially kept in place by the shields and support elements. Thus, the support element has a double function. On the one hand it supports and connects the magnetic shield with the remaining rotor; on the other hand it has a holding function in order to help in fixing the permanent magnet with the remaining part of the rotor. This is particularly advantageous as the rotor is rotated and centrifugal forces apply to the permanent magnets.

In another embodiment of the invention, the support element can be made of a non-magnetic material to reduce the magnetic flux leakage.

An example of a preferred material for the support element is iron. The advantage if the support element is made of a material with a low permeability is that leakage of the permanent magnet flux is reduced. This has the further advantage that damages to the remaining electrical machine by the armature reaction field and a corresponding leakage magnetic flux is reduced.

In another embodiment of the invention, the support element comprises a cavity.

This also serves the purpose of reduction of flux leakage. Thus, the cavity is advantageously arranged or located such that a magnetic flux through the support element, i.e. from the magnetic shield to the remaining rotor is impeded. In other words, by means of the cavity within the support element, the magnetic flux leakage through the support element is reduced and the magnetic reluctance is increased.

In another embodiment of the invention, the cavity has the further function to facilitate cooling of the rotor. For this purpose it might conduct a cooling medium such as air or water. If the cavity is arranged and prepared for conducting the cooling medium appropriate supply lines or supply pipes has to be provided.

In another embodiment of the invention, the magnetic shield covers at least 5 per cent or at least 10 per cent or at least 20 per cent of the main surface portion of the permanent magnet. In this context, the main surface portion is defined as the surface portion of the permanent magnet which is arranged and prepared to face the stator of the electrical machine.

In other words, a main surface portion and side surface portions can be attributed to a permanent magnet. The main surface portion which is also referred to as the gap facing surface portion is typically the largest surface portion of the permanent magnet. It is the main surface portion where the armature reaction field, namely the armature reaction flux lines, enter the permanent magnet. Thus, this surface portion has to be shielded and protected at its most sensitive regions. Due to the shaping of the permanent magnet involving a decreasing thickness of the circumferential edge portions, it is preferred that these 5 per cent or 10 per cent or 20 per cent of the main surface portion are shielded by the magnetic shield.

As in standard operating conditions the magnetic shield might decrease the efficiency and the performance of the electrical machine it might be beneficial to only cover these parts of the main surface portion of the permanent magnet which are prone to premature demagnetization. In other words, it has to be found a compromise between high and unblocked interaction of the permanent magnet with the stator of the electrical machine and shielding and protecting the permanent magnet against armature reaction flux lines leading to an irrevocable demagnetization of the permanent magnet.

In another embodiment of the invention, the magnetic shield has an increasing radial thickness towards the spacing between two adjacent permanent magnets.

Compared to an alternative magnetic shield with a constant radial thickness, increasing and adapting the radial thickness of the magnetic shield in relation with the varying radial thickness of the permanent magnet might optimize the performance of the electrical machine.

In particular the thickness, i.e. the radial thickness, of the magnetic shield is chosen such that the total radial thickness comprising the radial thickness of the permanent magnet and the radial thickness of the magnetic shield are kept substantially equal across the circumferential extension of the permanent magnet. In other words, the thinner the permanent magnet is with regard to the radial direction, the thicker the magnetic shield is chosen in radial direction. This design choice has also the advantage of minimizing cogging and torque ripple. In this context, it is also advantageous to provide a smooth transition of unshielded surface portions of the permanent magnet facing the air gap and regions where the magnetic shield covers the permanent magnet. The invention is furthermore directed to a wind turbine comprising an electrical generator with a stator and a rotor.

Particularly in the context of wind turbines it is highly advantageous to have a rotor with an increased capability to withstand demagnetization. This is advantageous because access to the rotor might be difficult. It might be difficult for wind turbines in general, and it is particularly difficult for off-shore wind turbines. If due to irreversible demagnetization the performance of the electrical generator is considerably reduced, this leads to considerable profit reduction.

Note that specific embodiments and details which have been described in relation to the rotor also apply to the wind turbine comprising the electrical generator with the rotor.

Embodiments of the invention are now described, by way of example only, with reference to the accompanying drawings, of which:
- Figure 1: shows a part of an electrical generator according to the state of the art;
- Figure 2: shows a detailed view of shaped permanent magnets of a rotor according to the state of the art;
- Figure 3: shows a rotor with a magnetic shield arranged inbetween two adjacent permanent magnets;
- Figure 4: shows a second embodiment of a magnetic shield;
- Figure 5: shows a third embodiment of a magnetic shield; and
- Figure 6: shows a wind turbine comprising a rotor with magnetic shielding.

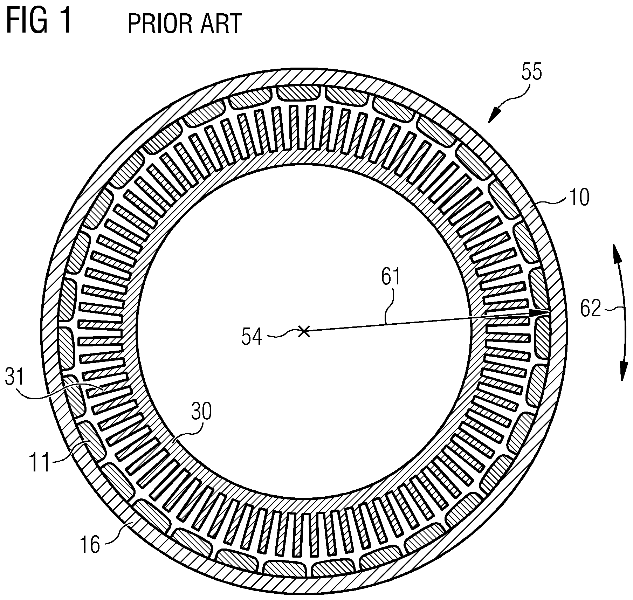

Figure 1 shows an electrical generator 55, which in the following is also simply referred to as a generator 55. The generator 55 comprises a rotor 10 and a stator 30. Both the rotor 10 and the stator 30 comprise a substantially rotationally symmetric shape. They comprise a common axis of symmetry which is denoted as the rotor axis of rotation 54. This arrangement of rotor 10 and stator 30 defines a radial direction 61 and a circumferential direction 62. The radial direction 61 projects away from the rotor axis of rotation 54, and the circumferential direction 62 represents the rotational direction of the rotor 10. The rotor 10 comprises a rotor back part 16 which exemplarily is made of electric iron. At the inner surface of the rotor back part 16 a plurality of permanent magnets 11 are fixed. The permanent magnets 11 are shaped. This signifies that they have a substantially cuboid shape, however, the circumferential edges are rounded. This becomes clearer in the more detailed drawings below. The stator 30 is arranged radially more inwards compared to the rotor 10. The stator 30 comprises a plurality of stator teeth 31. The part of the generator 55 that is shown in Figure 1 is a standard arrangement of a generator 55 according to the state of the art.

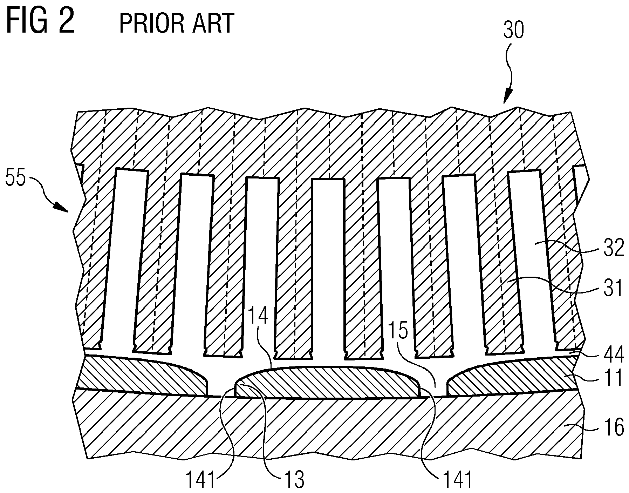

Figure 2 shows a more detailed view of a part of the generator 55 of Figure 1. The stator teeth 31 are separated by stator slots 32. The stator slots 32 are arranged and prepared for receiving a coil. The coil can be a preformed coil or can be wound *in situ.* The coil is positioned around each stator tooth 31. Thus, the stator tooth 31 acts as a core of the coil. The stator 30 is separated by the rotor 10 by an air gap 44. Note that a small air gap of a few millimeters would be a typical value for e.g. a generator diameter of a few meters. Each permanent magnet 11 comprises a main surface portion 14 and two side surface portions 141. The portion of the permanent magnet 11 that is adjacent to the side surface portion 141 and to the limiting edge between the side surface portion 141 and the main surface portion 14 is referred to as the circumferential edge portion 13. The main surface portion 14 is referred to as the surface portion that is facing the air gap 44. Such a shaped permanent magnet 11 with decreasing radial thickness towards the circumferential edge portions 13 is advantageous in terms of minimizing cogging and torque ripple. The permanent magnets 14 are attached and connected to the rotor back part 16. Note that such a design and arrangement is known from the prior art.

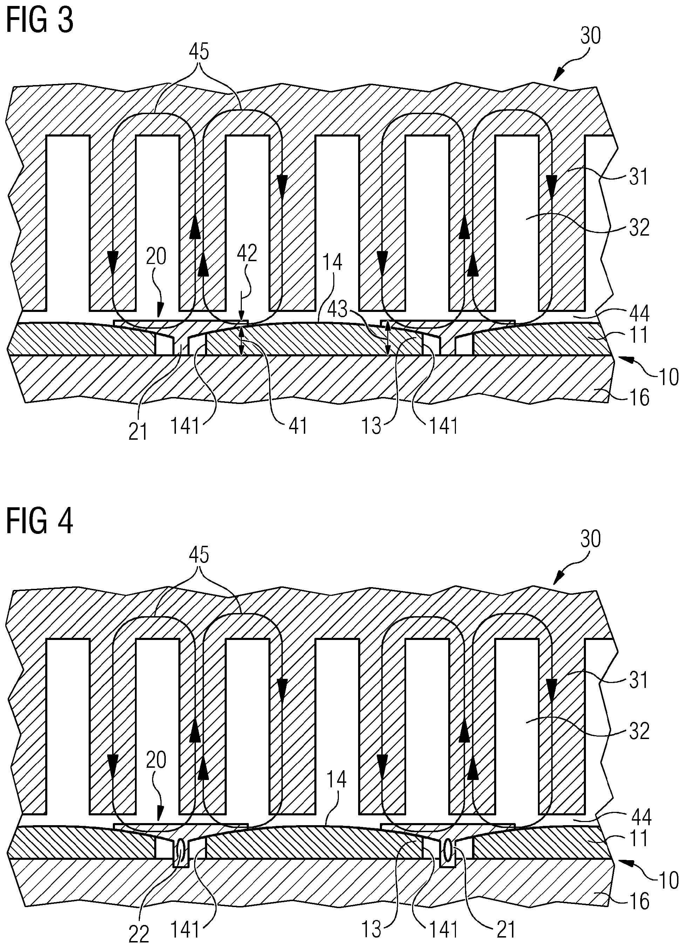

Figure 3 shows a first embodiment of the inventive rotor 10. Again, a plurality of permanent magnets 11 are attached to a rotor back part 16. Each permanent magnet 11 comprises a main surface portion 14 and side surface portions 141. Note that although in Figure 3 the rotor back part 16 and correspondingly the permanent magnets 11 and the stator 30 are drawn as being completely straight, in practice they typically are slightly curved as long as they belong to a rotationally electrical machine.

The stator 30 comprises a plurality of stator teeth 31 separated by stator slots 32. In case of an external electric or magnetic field armature reaction flux lines are generated mainly in the stator but which also reach into the rotor 10 across the air gap 44 which separates the rotor 10 and the stator 30. A key point of the disclosed rotor 10 is the magnetic shields 20 which are placed in the spacing 15 between two adjacent permanent magnets 11. Each magnetic shield 20 comprises a main part that is also referred to as the cover and a support element 21 which connects the cover with the remaining rotor. In the embodiment of Figure 3, the support element 21 is attached with the rotor back part 16. The magnetic shield 20 covers the circumferential edge portions 13 of the permanent magnet 11. As a consequence, the armature reaction flux lines 45 reach less into the permanent magnet 11 since they have alternative path through the magnetic shield 20. Thus an irreversible damage to the permanent magnet 11 in form of an irreversible demagnetization of the permanent magnet 11 is significantly reduced, and even substantially prevented.

Note that, in a first alternative, the magnetic shield 20 and the support element 21 may build a first component, the rotor back part 16 may build a second component, and both components are connected with each other.

In a second alternative, all three parts - the magnetic shield 20, the support element 21 and the rotor back part 16 - may build one single component. This has the advantage of increased stability and strength compared to separated components which are connected with each other.

Advantageously, all three parts are made of the same or similar material, e.g. electric steel.

Figure 4 shows a second embodiment of the magnetic shield 20 wherein the magnetic shield 20, in particular the support element 21 comprises a cavity 22. The cavity has the advantageous effect that magnetic flux leakage from the permanent magnets 11 towards the rotor back part 16 is impeded, thus reduced. In practice a compromise between stability and mechanical structural considerations and the considerations regarding reducing the magnetic flux leakage has to be made.

Note that these cavities 22 might be used for conducting a cooling medium such as water or air through the rotor 10. This is advantageous because particularly in the case of applying a strong external magnetic or electric field to the generator heat is dissipated and has to be transferred away.

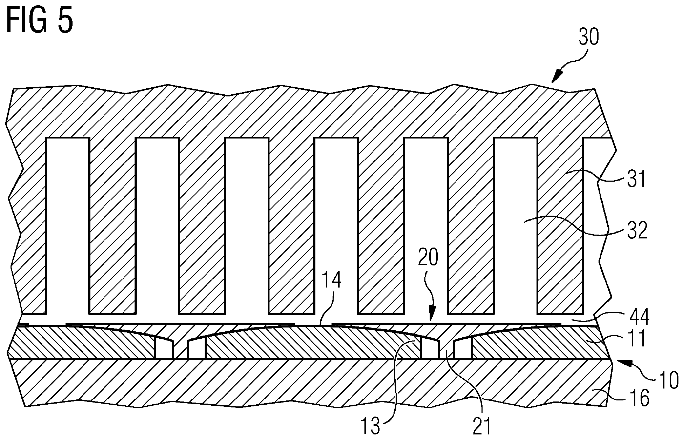

Figure 5 shows a third embodiment of a magnetic shield 20 covering not only the circumferential edge portion 13 of the permanent magnet 11 but reaching substantially across the main surface portion 14 of the permanent magnet 11. Such a relatively large covering of the main surface portion 14 of the permanent magnet 11 is for example advantageous in terms of the holding function of the magnetic shield 20. However, it has to be considered that the electrical performance of the generator might be reduced due to the magnetic shield 20 covering a relatively large surface portion of the permanent magnet 11.

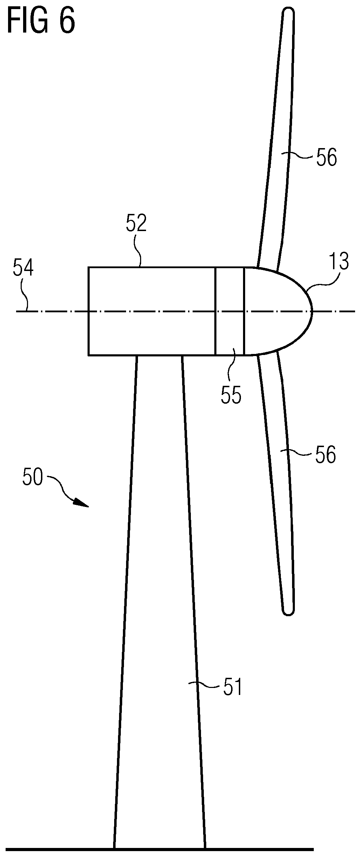

Figure 6 shows a wind turbine 50 which is a preferred device where the inventive rotor can be applied. Such a wind turbine 50 typically comprises a tower 51 and a nacelle 52. The nacelle 52 is mounted at the top of the tower 51. The nacelle 52 is mounted rotatable with regard to the tower 51 by means of a yaw bearing. The axis of rotation of the nacelle 52 with regard to the tower 51 is referred to as the yaw axis. The wind turbine 50 also comprises a hub 53 with three rotor blades 56 (of which two rotor blades 56 are depicted in Figure 6). The hub 53 is mounted rotatable with regard to the nacelle 52 by means of a main bearing. The hub 53 is mounted rotatable about the rotor axis of rotation 54. The wind turbine 50 furthermore comprises a main shaft, which connects the hub 53 with the rotor 10 of the generator 55. The hub 53 is connected directly to the rotor 10, thus the wind turbine 50 is referred to as a gearless, direct driven wind turbine. As an alternative, the hub 53 may also be connected to the rotor 10 via a gearbox. This type of wind turbine is referred to as a geared wind turbine. The generator 55 is accommodated within the nacelle 52. The generator 55 is arranged and prepared for converting the rotational energy from the rotor 10 into electrical energy.

## Claims

1. Rotor (10) of an electrical machine, in particular of an electric generator (55),
wherein
- the rotor (10) comprises a plurality of circumferentially arranged permanent magnets (11) attached to a rotor back part (16),
- the magnets (11) have a decreasing radial thickness (41) at their circumferential edge portions (13),
- adjacent permanent magnets (11) comprise a spacing (15) between each other, and wherein
- a magnetic shield (20) at least partially covers the spacing (15) between two adjacent permanent magnets (11) and at least partially covers the circumferential edge portions (13), such that alternative flux paths for the armature reaction field are created,
- the magnetic shield (20) is connected with the rotor back part (16) by means of a support element (21),
- the support element (21) comprises a cavity (22) or is made of a non-magnetic material.

2. Rotor (10) according to claim 1,
wherein the magnetic shield (20) comprises electric steel.

3. Rotor (10) according to one of the preceding claims,
wherein the permanent magnet (11) comprises less than 1 per cent of weight, in particular less than 0.5 per cent of weight, of dysprosium.

4. Rotor (10) according to one of the preceding claims,
wherein the magnetic shield (20) applies a mechanical holding support to the permanent magnets (11).

5. Rotor (10) according to one of the preceding claims, wherein the cavity (22) is configured to conduct a cooling medium.

6. Rotor (10) according to one of the preceding claims, wherein the magnetic shield (20) covers at least 5 per cent or at least 10 per cent or at least 20 per cent of the main surface portion (14) of the permanent magnet (11), the main surface portion (14) being defined as the surface portion of the permanent magnet (11) which is arranged and prepared to face the stator (30) of the electrical machine.

7. Rotor (10) according to one of the preceding claims, wherein the magnetic shield (20) has an increasing radial thickness (42) towards the spacing (15) between two adjacent permanent magnets (11).

8. Rotor (10) according to one of the preceding claims, wherein the total radial thickness (43) comprising the radial thickness (41) of the permanent magnet (11) and the radial thickness (42) of the magnetic shield (20) is substantially equal across the circumferential extension of the permanent magnet (11).

9. Wind turbine (50) comprising an electric generator (55) with a stator (30) and a rotor (10) according to one of the preceding claims.

## Patentansprüche

1. Rotor (10) einer elektrischen Maschine, insbesondere eines Stromgenerators (55),
wobei
- der Rotor (10) mehrere umfänglich angeordnete Dauermagneten (11) umfasst, die an einem Rotorrückteil (16) befestigt sind,
- die Dauermagneten (11) an ihren umfänglichen Randabschnitten (13) eine abnehmende radiale Dicke (41) aufweisen,
- benachbarte Dauermagneten (11) einen Zwischenraum (15) zwischen sich aufweisen,
und wobei
- eine Magnetabschirmung (20) den Zwischenraum (15) zwischen zwei benachbarten Dauermagneten (11) zumindest teilweise abdeckt und die umfänglichen Randabschnitte (13) zumindest teilweise abdeckt, so dass alternative Flusswege für das Ankerrückwirkungsfeld geschaffen werden,
- die Magnetabschirmung (20) durch ein Stützelement (21) mit dem Rotorrückteil (16) verbunden ist,
- das Stützelement (21) eine Aussparung (22) hat oder aus einem nicht-magnetischen Material besteht.

2. Rotor (10) nach Anspruch 1,
wobei die Magnetabschirmung (20) Elektrostahl umfasst.

3. Rotor (10) nach einem der vorhergehenden Ansprüche, wobei der Dauermagnet (11) weniger als 1 Gewichtsprozent, insbesondere weniger als 0,5 Gewichtsprozent an Dysprosium umfasst.

4. Rotor (10) nach einem der vorhergehenden Ansprüche, wobei die Magnetabschirmung (20) eine mechanische Halteauflage für die Dauermagneten (11) darstellt.

5. Rotor (10) nach einem der vorhergehenden Ansprüche, wobei die Aussparung (22) dafür ausgelegt ist, ein Kühlmedium zu leiten.

6. Rotor (10) nach einem der vorhergehenden Ansprüche, wobei die Magnetabschirmung (20) mindestens 5 Prozent oder mindestens 10 Prozent oder mindestens 20 Prozent des Hauptoberflächenabschnitts (14) des Dauermagneten (11) bedeckt, wobei der Hauptoberflächenabschnitt (14) als der Flächenabschnitt des Dauermagneten (11) definiert ist, der dafür angeordnet und vorbereitet ist, dem Stator (30) der elektrischen Maschine zugewandt zu sein.

7. Rotor (10) nach einem der vorhergehenden Ansprüche, wobei die Magnetabschirmung (20) eine zunehmende radiale Dicke (42) in Richtung auf den Zwischenraum (15) zwischen zwei benachbarten Dauermagneten (11) aufweist.

8. Rotor (10) nach einem der vorhergehenden Ansprüche, wobei die radiale Gesamtdicke (43), die die radiale Dicke (41) des Dauermagneten (11) und die radiale Dicke (42) der Magnetabschirmung (20) umfasst, über die umfängliche Ausdehnung des Dauermagneten (11) im Wesentlichen gleich ist.

9. Windturbine (50) umfassend einen Stromgenerator (55) mit einem Stator (30) und einem Rotor (10) nach einem der vorhergehenden Ansprüche.

## Revendications

1. Rotor (10) d'une machine électrique, en particulier d'un générateur électrique (55), dans lequel
- le rotor (10) comprend une pluralité d'aimants permanents (11) disposés de manière circonférentielle fixés à une partie arrière de rotor (16),
- les aimants permanents (11) ont une épaisseur radiale décroissante (41) au niveau de leurs parties latérales circonférentielles (13),
- des aimants permanents adjacents (11) comprennent un espacement (15) les uns entre les autres,
et dans lequel
- une protection magnétique (20) couvre au moins partiellement l'espacement (15) entre deux aimants permanents adjacents (11) et couvre au moins partiellement les parties latérales circonférentielles (13), de telle sorte que des trajets de flux alternatifs pour le champ de réaction d'induit sont créés,
- la protection magnétique (20) est reliée à la partie arrière de rotor (16) grâce à un élément de support (21),
- l'élément de support (21) comprend une cavité (22) ou est composé d'un matériau non magnétique.

2. Rotor (10) selon la revendication 1, dans lequel la protection magnétique (20) comprend de l'acier électrique.

3. Rotor (10) selon l'une des revendications précédentes, dans lequel l'aimant permanent (11) comprend moins d'un pourcent de poids, en particulier moins de 0,5 pourcent de poids, de dysprosium.

4. Rotor (10) selon l'une des revendications précédentes, dans lequel la protection magnétique (20) applique un support de retenue mécanique aux aimants permanents (11).

5. Rotor (10) selon l'une des revendications précédentes, dans lequel la cavité (22) est configurée pour acheminer un milieu de refroidissement.

6. Rotor (10) selon l'une des revendications précédentes, dans lequel la protection magnétique (20) couvre au moins 5 pourcent ou au moins 10 pourcent ou au moins 20 pourcent de la partie de surface principale (14) de l'aimant permanent (11), la partie de surface principale (14) étant définie en tant que partie de surface de l'aimant permanent (11) qui est disposée et préparée pour faire face au stator (30) de la machine électrique.

7. Rotor (10) selon l'une des revendications précédentes, dans lequel la protection magnétique (20) présente une épaisseur radiale croissante (42) vers l'espacement (15) entre deux aimants permanents adjacents (11).

8. Rotor (10) selon l'une des revendications précédentes, dans lequel l'épaisseur radiale totale (43) comprenant l'épaisseur radiale (41) de l'aimant permanent (11) et l'épaisseur radiale (42) de la protection magnétique (20) est quasiment égale à travers l'extension circonférentielle de l'aimant permanent (11).

9. Turbine éolienne (50) comprenant un générateur électrique (55) ayant un stator (30) et un rotor (10) selon l'une des revendications précédentes.
